# EUROPÄISCHE PATENTSCHRIFT

(11) **EP 4 200 094 B1**
(45) Veröffentlichungstag und Bekanntmachung des Hinweises auf die Patenterteilung: **12.06.2024**
(21) Anmeldenummer: 21754893.2
(22) Anmeldetag: 20.07.2021
(51) Int. Cl.: B22F 3/10, B22F 5/10, B22F 7/08, B22F 10/10, B22F 10/64, B33Y 10/00, B33Y 80/00, B22F 5/00, C22C 1/04

(54) **GUSSEINSATZ UND VERFAHREN ZUR HERSTELLUNG**
CASTING INSERT AND METHOD OF MANUFACTURING
INSERT DE COULAGE ET PROCÉDÉ DE FABRICATION

(30) Priorität: 20.08.2020 AT 5016520 U
(43) Veröffentlichungstag der Anmeldung: 28.06.2023
(73) Patentinhaber: Plansee SE, 6600 Reutte (AT)
(72) Erfinder: HANDTRACK, Dirk, 6600 Reutte (AT); KESTLER, Heinrich, 6600 Reutte (AT)
(74) Vertreter: Ciesla, Bettina
(86) Internationale Anmeldenummer: PCT/AT2021/060253
(87) Internationale Veröffentlichungsnummer: WO 2022/036377

(56) Entgegenhaltungen:
- WO-A1-2019/123938
- US-A1- 2016 017 724
- US-A1- 2017 246 677

## Beschreibung

Die vorliegende Erfindung betrifft einen Gusseinsatz mit den Merkmalen des Anspruchs 1 sowie ein Verfahren zur Herstellung eines Gusseinsatzes mit den Merkmalen des Anspruchs 10.

Unter einem Gusseinsatz (engl.: *casting insert*) wird im Rahmen der vorliegenden Erfindung eine Komponente zur Verwendung mit einer Gussform, insbesondere einer Gussform für den Druckguss von Metallen verstanden. Darunter fallen beispielsweise sogenannte Inserts, Angussringe, Kühleinsätze und Kernstifte.

Die genannten Komponenten zeichnen sich dadurch aus, dass sie hohen erosiven und thermischen Belastungen widerstehen müssen. Insbesondere werden Gusseinsätze für eine lokal verstärkte Wärmeabfuhr aus einem Gussbauteil genutzt.

Während die Gussform selbst in der Regel aus einem Warmarbeitsstahl hergestellt ist, werden für Gusseinsätze auch Werkstoffe verwendet, die eine höhere Wärmeleitfähigkeit als die für Gussformen verwendeten Stähle aufweisen.

Beispielsweise wurden Gusseinsätze aus Legierungen auf Basis von Wolfram oder Molybdän vorgeschlagen. Insbesondere geeignet sind Wolfram-Schwermetalllegierungen oder TZM Molybdänlegierungen wegen der hohen Wärmeleitfähigkeit und der Beständigkeit gegenüber Metallschmelzen.

Gusseinsätze können für eine aktive Kühlung ausgebildet sein. Dazu werden in dem massiven Gusseinsatz Kühlkanäle eingebracht, über die ein Kühlmittel zirkulieren kann.

Nach dem Stand der Technik sind Kühlkanäle üblicherweise durch Bohrungen gebildet. Gewinkelte Verläufe können über Querbohrungen, die nachträglich mit Stopfen verschlossen werden, realisiert werden. Geometrisch komplexere Verläufe von Kühlkanälen können verwirklicht werden, indem zunächst in Bauteilhälften eines Gusseinsatzes Ausnehmungen eingebracht und die Bauteilhälften zum fertigen Gusseinsatz gefügt werden.

Die WO2019123938A1 (HONDA FOUNDRY) zeigt einen Gusseinsatz mit einem Kühlkanal. Darin werden Kühlkanäle in einem massiven Oberteil ausgebildet und der Oberteil mit einem, weitere Kanäle aufweisenden Unterteil gefügt.

Aufgabe der vorliegenden Erfindung ist es, einen verbesserten Gusseinsatz und ein Verfahren zur Herstellung anzugeben.

Insbesondere soll der Gusseinsatz bzw. das Verfahren eine wirtschaftlichere Materialnutzung ermöglichen. Weiters soll eine besonders vorteilhafte Wärmeableitung und / oder Wärmespeicherung ermöglicht werden.

Gelöst wird die Aufgabe durch einen Gusseinsatz mit den Merkmalen von Anspruch 1 bzw. ein Verfahren mit den Merkmalen von Anspruch 10.

Vorteilhafte Weiterbildungen sind in den abhängigen Ansprüchen definiert.

Indem der erfindungsgemäße Gusseinsatz nach Anspruch 1 ausgeführt ist, ist ein Gusseinsatz angegeben, welcher die thermischen, mechanischen und chemischen Anforderungen unter besonders günstiger Materialausnutzung erfüllt.

Der die Wandung bildende Werkstoff wird als Wandungsmaterial bezeichnet. Eine von der Wandung gebildete Kavität bedeutet, dass beim erfindungsgemäßen Gusseinsatz die Wandung eine Schale bildet, der Gusseinsatz also nicht vollständig von dem die Wandung bildenden Werkstoff, dem Wandungsmaterial, erfüllt ist. Der Gusseinsatz ist demnach ein Hohlkörper, in dem wenigstens ein Kühlkanal und gegebenenfalls eine Stützstruktur ausgebildet ist. Dies bedeutet nicht, dass der Gusseinsatz innerhalb der Kavität in allen Ausführungsbeispielen gänzlich frei von Material ist. Vielmehr kann die Kavität vollständig oder teilweise von einem Füllmaterial erfüllt sein, welches sich von dem Wandungsmaterial unterscheidet.

Es wird in aller Regel jener Abschnitt, der bei einer Verwendung des Gusseinsatzes mit Schmelze in Kontakt tritt, eine geschlossene Wandung aufweisen. Der dieser Seite abgewandte Teil des Gusseinsatzes kann hingegen offen ausgebildet sein.

Es ist vorgesehen, dass die Wandung eine Wandstärke aufweist, wobei die Wandstärke entlang wenigstens 50% einer Erstreckung der Wandung weniger als 25% eines Durchmessers des Gusseinsatzes beträgt, bevorzugt abschnittsweise weniger als 20%, weiter bevorzugt abschnittsweise weniger als 10% des Durchmessers beträgt.

Damit ist zum Ausdruck gebracht, dass der Gusseinsatz dünnwandig ausgebildet ist. Eine untere Grenze der Dünnwandigkeit ergibt sich naturgemäß aus den Anforderungen an die mechanische und / oder chemische Beständigkeit der Wandung. Insbesondere beträgt die Wandstärke wenigstens 2% eines Durchmessers des Gusseinsatzes, weiter bevorzugt wenigstens 5% eines Durchmessers des Gusseinsatzes. In absoluten Werten gesprochen, ist es bevorzugt, dass die Wandstärke wenigstens 1 mm beträgt, weiter bevorzugt wenigstens 2 mm beträgt.

Die Wandstärke ist durch einen Normalabstand zwischen einem der Kavität zugewandten Punkt der Wandung und einem Punkt an einer äußeren Oberfläche der Wandung festlegbar.

Die Wandstärke beträgt entlang wenigstens 50%, bevorzugt entlang wenigstens 80% einer Erstreckung der Wandung in einem Längsschnitt durch den Gusseinsatz weniger als 25% des Durchmessers, bevorzugt weniger als 20% des Durchmessers, weiter bevorzugt weniger als 10% des Durchmessers des Gusseinsatzes. Der Längsschnitt wird für diese Definition so gelegt, dass die Wandstärke streckentreu abgebildet wird.

Gemäß einer Weiterbildung liegt die Wandstärke durchschnittlich bei weniger als 25%, bevorzugt durchschnittlich bei weniger als 20%, insbesondere bevorzugt durchschnittlich bei weniger als 10% des Durchmessers des Gusseinsatzes. Freilich kann lokal eine größere Wandstärke vorgesehen sein, doch liegt im Durchschnitt eine geringe Wandstärke vor.

Zur Bewertung der Wandstärke werden jene Abschnitte der Wandung betrachtet, die in einem Einsatz des Gusseinsatzes in eine Gussform ragen. In anderen Worten werden nur Wandstärken an jenen Positionen der Wandung in die Verhältnisbildung miteinbezogen, an welchen die Wandung in einer Einbausituation in einer Gussform eine äußere Oberfläche gegenüber einer Schmelze bildet.

Etwaige Verstärkungen, Bünde und dergleichen, die vorwiegend einer Aufnahme an der Gussform dienen, werden dabei nicht einbezogen.

Ebenfalls nicht in die Verhältnisbildung einbezogen wird eine etwaige Stützstruktur.

Die Vorteile einer Dünnwandigkeit sind zum einen, dass weniger von dem relativ teuren Wandmaterial, der Refraktärmetall-Legierung, zur Ausbildung der Gestalt des Gusseinsatzes aufgewendet werden muss. Neben dieser wirtschaftlichen Überlegung kann bei Dünnwandigkeit ein größeres Volumen des Gusseinsatzes mit einem Füllmaterial befüllt werden, welches beispielsweise eine besonders geeignete Wärmeleitfähigkeit oder eine andere Eigenschaft aufweist, welche Eigenschaft man bei einem größeren Volumenanteil in höherem Maße ausnutzen kann als bei einem dickwandigen Gusseinsatz mit folglich geringerem Volumenanteil an Füllmaterial.

Durch die erfindungsgemäße Ausbildung wird nur so viel Material zur Schaffung der Wandung aufgewandt, wie es zur Realisierung der erforderlichen Wärmeableitung, einer gewünschten Wärmespeicherung sowie für eine Beständigkeit gegenüber Schmelzen notwendig ist.

Dies steht im Gegensatz zu aus dem Stand der Technik bekannten Gusseinsätzen, welche massiv ausgebildet sind. Gusseinsätze nach dem Stand der Technik sind also im Wesentlichen vollständig von dem Material erfüllt, welches in einem Einsatz mit einer Schmelze in Kontakt tritt.

Die Erfindung erlaubt eine materialsparende Fertigung eines monolithisch hergestellten Gusseinsatzes. Vorteile des Gusseinsatzes gegenüber dem Stand der Technik sind unter anderem:
- eine verbesserte Wärmeableitung, Freiheit in der Ausführung des Kühlkanals bezüglich räumlichen Verlaufs und Querschnittsform,
- Kühlung nur dort, wo es notwendig ist,
- Verringerung des Wärmespeichervermögens bei Verwendung eines Werkstoffs mit eigentlich hoher Wärmekapazität.

Insbesondere kann damit in der Anwendung (z.B. im Druckguss, insbesondere Aluminium-Druckguss) eine Reduktion von Zykluszeiten erreicht werden.

Erfindungsgemäß ist das Wandungsmaterial im Wesentlichen von einer flüssigphasen-gesinterten Refraktärmetall-Legierung gebildet. "Im Wesentlichen" bedeutet hier, dass das Wandungsmaterial zu wenigstens 80 vol.% (Volumenprozent), bevorzugt zu größer 90 vol.%, weiter bevorzugt zu größer 95 vol.%, insbesondere vollständig aus der flüssigphasen-gesinterten Refraktärmetall-Legierung besteht.

Unter Refraktärmetallen werden im Zusammenhang mit der vorliegenden Anmeldung die Metalle der 4. Gruppe (Titan, Zirconium und Hafnium), der 5. Gruppe (Vanadium, Niob, Tantal) und der 6. Gruppe (Chrom, Molybdän, Wolfram) des Periodensystems sowie Rhenium verstanden. Unter Refraktärmetalllegierungen sind Legierungen mit wenigstens 50 at. %

(Atomprozent) des betreffenden Elements gemeint.

Insbesondere relevant sind Wolfram-Schwermetall-Legierungen umfassend Wolfram mit einem oder mehreren Elementen aus der Gruppe Nickel, Eisen, Kupfer, Molybdän sowie flüssigphasen-sinterbare Molybdän-Basis-Legierungen umfassend Molybdän mit einem oder mehreren Elementen aus der Gruppe Nickel, Eisen, Kupfer, Wolfram.

Der Mindestgehalt an Wolfram an in Wolfram-Schwermetall-Legierungen bzw. an Molybdän in flüssigphasen-sinterbaren Molybdän-Basis-Legierungen beträgt bevorzugt mindestens 85 wt.% (Gewichtsprozent), insbesondere mindestens 87 wt.% .

Die Elemente werden im Folgenden auch in Abkürzung mit dem Elementsymbol bezeichnet (W, Mo, Cu usw.).

Flüssigphasen-gesintert bedeutet, dass die pulvermetallurgische Herstellungsroute des Gusseinsatzes unter Auftreten schmelzflüssiger Phase durchgeführt wurde. Damit verbunden ist unter anderem eine vorteilhaft geringe Porosität im Wandungsmaterial. Zur Klarstellung sei angemerkt, dass bei Wolfram-Schwermetallen und flüssigphasen-sinterbaren Molybdän-Basis-Legierungen typischerweise das Wolfram bzw. Molybdän selbst nicht aufgeschmolzen wird.

Das Wandungsmaterial ist demnach durch einen Verbundwerkstoff aus Körnern aus Refraktärmetall mit einer die Körner umgebenden Binderphase ausgebildet.

Insbesondere werden bevorzugt folgende Zusammensetzungen von Refraktärmetall-Legierungen vorgeschlagen:

**Tabelle 1: Beispiele für geeignete Wolfram-Schwermetall-Legierungen. DENSIMET^{®} und INERMET^{®} sind eingetragene Marken der PLANSEE SE.**

| Werkstoff | Kurzbezeichnung | W-Gehalt [wt. %] | Rest |
|---|---|---|---|
| DENSIMET^{®} 170 | D170 | 90,5 | Ni, Fe |
| DENSIMET^{®} 176 /W | D176/DW | 92,5 | Ni, Fe |
| DENSIMET^{®} 180 | D180 | 95,0 | Ni, Fe |
| DENSIMET^{®} 185 | D185 | 97 | Ni, Fe |
| DENSIMET^{®} 188 | D188 | 98,5 | Ni, Fe |
| DENSIMET^{®} D2M | D2M | 90,0 | Ni, Mo, Fe |
| | | | |
| INERMET^{®} 170 | IT1 70 | 90,2 | Ni, Cu |
| INERMET^{®} 176 | IT176 | 92,5 | Ni, Cu |
| INERMET^{®} 180 | IT180 | 95,0 | Ni, Cu |

Als besonders vorteilhaft für einen Einsatz mit Aluminium-Schmelzen haben sich die Legierungen D185 und D2M erwiesen, da diese einen geringen Anteil an Fe-Ni-Binderphase aufweisen, welche von flüssigem Aluminium angegriffen wird.

Ebenfalls geeignet sind flüssigphasen-sinterbare Refraktärmetall-Legierungen auf der Basis von Molybdän. Besonders geeignet sind Molybdänlegierungen mit Gehalten von rund 90 wt.% Molybdän und Gehalten von Nickel im Bereich zwischen 3 wt.% und 7 wt.% , Kupfer zwischen 1 wt.% - 6 wt.%, und Eisen zwischen 0,5 wt.% und 2 wt.%.

Beispielhaft seien dazu ausgewählte Zusammensetzungen genannt:

**Tabelle 2: Beispiele für geeignete flüssigphasen-sinterbare Molybdän-Legierungen (Auswahl)**

| Mo-Gehalt [wt.%] | Ni-Gehalt [wt.%] | Cu-Gehalt [wt.%] | Fe-Gehalt [wt.%] |
|---|---|---|---|
| 90 | 6,66 | 1,67 | 1,67 |
| 90 | 4 | 5,1 | 0,9 |
| 90 | 3,34 | 6,0 | 0,66 |

Aufgrund der Dichteverhältnisse beträgt in diesen Beispielen für flüssigphasen-sinterbare Molybdän-Legierungen ein Binderphasenanteil ca. 12,5 vol.%.

Die hier genannten Beispiele sind nicht einschränkend zu verstehen.

Besonders vorteilhaft an dem erfindungsgemäßen Gusseinsatz ist es, dass die relativ teure Refraktärmetall-Legierung im Gusseinsatz vor allem nur dort vorliegt, wo es auf die chemischen, mechanischen und / oder thermischen Vorzüge dieser Legierungen ankommt. Dabei handelt es sich insbesondere um Abschnitte der Wandung, die bei einem Einsatz einer Schmelze ausgesetzt sind.

Der wirtschaftliche Vorteil bei der Verwendung einer Molybdän-Legierung ist, dass diese auf ein Volumen bezogen billiger ist als eine Wolfram-Schwermetall-Legierung.

Der wenigstens eine Kühlkanal kann zumindest abschnittsweise innerhalb der Kavität und / oder zumindest abschnittsweise innerhalb der Wandung ausgebildet sein.

Das heißt, es ist einerseits die Variante erfasst, dass der wenigstens eine Kühlkanal vollständig innerhalb der Kavität ausgebildet ist. Weiters kann der wenigstens eine Kühlkanal gänzlich innerhalb der Wandung ausgebildet sein. Ferner kann der wenigstens eine Kühlkanal teilweise innerhalb der Wandung und teilweise von der Wandung beabstandet in der Kavität verlaufen.

Freilich können auch mehrere Kühlkanäle vorgesehen sein, wobei die oben genannte Bedingung hinsichtlich der Ausbildung als zumindest abschnittsweise innerhalb der Kavität und / oder zumindest abschnittsweise innerhalb der Wandung zumindest für einen Kühlkanal, vorzugsweise für alle Kühlkanäle gilt.

Ein zumindest abschnittsweise innerhalb der Kavität ausgebildeter Kühlkanal bedeutet, dass der Kühlkanal zumindest abschnittsweise von der Wandung beabstandet vorliegt. Der Kühlkanal ist demnach zumindest abschnittsweise im Wesentlichen als Röhrchen umfassend eine Wand ausgebildet. Der Kühlkanal hat, in anderen Worten, hier zumindest abschnittsweise seine "eigene", von der Wandung verschiedene Wand. Diese Ausprägung des Kühlkanals ist durch ein additives Fertigungsverfahren besonders vorteilhaft darstellbar.

Der Kühlkanal kann auch zumindest abschnittsweise innerhalb der Wandung ausgebildet sein. Das bedeutet, dass der Kühlkanal auch vollständig oder teilweise von der Wandung umschlossen ist. Eine Wand des Kühlkanals ist in dieser Variante zumindest teilweise von der Wandung des Gusseinsatzes gebildet. Dies beschreibt die Möglichkeit, Kühlkanäle alternativ oder zusätzlich an der oder in der Wandung zu formen. Damit ist gemeint, dass Kühlkanäle alternativ oder zusätzlich zu einem von der Wandung beabstandeten Verlauf auch integral mit der Wandung ausgebildet sein können.

Damit kann beispielsweise erreicht werden, den Kühlkanal abschnittsweise besonders nahe an einer äußeren Oberfläche des Gusseinsatzes anzuordnen. Dies erlaubt eine vorteilhafte Wärmeabfuhr aus den thermisch besonders belasteten Bereichen der Wandung.

Auch diese Ausprägung eines Kühlkanals ist durch ein additives Fertigungsverfahren besonders vorteilhaft darstellbar. Es kann beispielsweise bei einem schichtweisen Aufbau des Gusseinsatzes an Positionen eines freien Leitungsquerschnitts eines späteren Kühlkanals kein Material und / oder ein entfernbarer Platzhalter abgelegt werden.

Insbesondere kann vorgesehen sein, dass ein Abstand eines Kühlkanals zu einer äußeren Oberfläche des Gusseinsatzes an einer der Schmelze zugewandten Stirnseite des Gusseinsatzes, also an jenen Bereichen, die weiter in die Gussform ragen, geringer ist als in Bereichen, welche weniger weit in die Gussform ragen.

Der wenigstens eine Kühlkanal ist dafür ausgebildet, ein Kühlmedium definiert durch den Gusseinsatz zu leiten. Das Kühlmedium ist in der Regel Wasser oder Öl oder eine Emulsion.

Unnötige Materialanhäufungen werden damit vermieden. Zudem erlaubt die erfindungsgemäße Ausgestaltung eine größere Freiheit in der räumlichen Anordnung der Kühlkanäle, da diese nicht notwendigerweise der Wandung folgen müssen.

Üblicherweise ist der wenigstens eine Kühlkanal so ausgebildet, dass ein darin leitbares Kühlmedium den Gusseinsatz durchströmen kann. Es besteht daher in der Regel ein Zuström- und ein Abströmabschnitt. Das Kühlmedium wird über den Zuströmabschnitt in den Gusseinsatz geleitet, durchströmt den Gusseinsatz und verlässt den Gusseinsatz über den Abströmabschnitt. Der Verlauf des Kühlkanals kann in einem einfachen Fall grob U-förmig sein und im Wesentlichen in einer Ebene liegen.

Eine noch intensivere und gleichmäßigere Wärmeabfuhr wird erreicht, wenn der Kühlkanal einen bevorzugt zumindest teilweise spiralförmigen Verlauf annimmt. Günstig ist es weiters, wenn der Kühlkanal spiralförmig im Wesentlichen einer Außenkontur des Gusseinsatzes folgt, derart dass der Kühlkanal im Wesentlichen gleichmäßig von der Außenkontur beabstandet verläuft. Dies trägt weiter zu einer homogenen Wärmeabfuhr bei.

Es kann vorgesehen sein, dass der wenigstens eine Kühlkanal zumindest abschnittsweise Querschnittsänderungen aufweist. Beispielsweise ist es vorstellbar, einen freien Strömungsquerschnitt des Kühlkanals abschnittsweise zu verengen oder in seiner Querschnittsform zu variieren. Damit kann ein Wärmeübergang an lokale Erfordernisse angepasst werden.

Bei geringeren Anforderungen an die zu entziehende Wärmeleistung oder kleineren Gusseinsätzen wie etwa bei sogenannten Kühlfingern kann es ausreichen, dass der Kühlkanal lediglich in Form eines Sacklochs ausgeführt ist. In diesem Fall ist kein diskreter Zuström- und Abströmabschnitt angelegt, vielmehr muss ein Kühlmedium durch den als Sackloch ausgeführten Kühlkanal sowohl eintreten als auch austreten. Eine Kühlung erfolgt in diesem Fall durch eine sogenannte Prallkühlung (engl. *impingement cooling)* am Grund des Kühlkanals.

Bevorzugt kann vorgesehen sein, eine die Wandung und den wenigstens einen Kühlkanal verbindende Stützstruktur ausgebildet ist. Dies beschreibt den Fall, wonach der wenigstens eine Kühlkanal von einer Materialverbindung, der Stützstruktur, von der Wandung beabstandet positioniert wird.

Die Stützstruktur dient zur mechanischen Stabilisierung und Positionierung des Kühlkanals. Damit ist die Möglichkeit geschaffen, Kühlkanäle schlank und dünnwandig und gleichzeitig mechanisch robust auszuführen. Die Kavität zwischen den Kühlkanälen und der Wandung des Gusseinsatzes bleibt erhalten. Damit ist die Möglichkeit geschaffen, die Kavität zwischen den Kühlkanälen und der Wandung des Gusseinsatzes mit einem zusätzlichen Werkstoff zu füllen.

Weiter bevorzugt kann vorgesehen sein, dass die Stützstruktur in Form diskreter Stege und / oder Rippen ausgebildet ist.

Damit ist der bevorzugte Fall definiert, bei welchem ein Kühlkanal durch eine gitterartige Ausbildung der Stützstruktur in Form diskreter Stege und / oder Rippen abgestützt wird.

Die Stützstruktur kann beispielsweise als drei-dimensionales Fachwerk ausgebildet sein.

Günstig ist es, wenn die Stützstruktur so offen gestaltet ist, dass Zwischenräume zwischen Kühlkanälen und Wandung für ein Füllmaterial befüllbar bleiben. Eine Befüllung mit Füllmaterial kann beispielsweise durch ein Hintergießen erfolgen.

Bevorzugt ist vorgesehen, dass die Stützstruktur aus dem gleichen Werkstoff wie die Wandung ausgebildet ist.

Dies beschreibt den bevorzugten Fall, dass die Stützstruktur und die Wandung aus dem gleichen Werkstoff bestehen.

Insbesondere geht die Stützstruktur einstückig von der Wandung in die Wand des Kühlkanals über.

Weiter bevorzugt besteht auch der Kühlkanal oder die mehreren Kühlkanäle aus dem gleichen Werkstoff wie die Wandung.

Insbesondere bestehen Wandung, Stützstruktur und Kühlkanäle aus dem gleichen Werkstoff, einer flüssigphasen-gesinterten Refraktärmetall-Legierung.

Damit ist beispielsweise bei einer generativen Fertigung des Gusseinsatzes kein Wechsel des Werkstoffes während des Aufbaus erforderlich. Es können Wandung, Stützstruktur und Kühlkanäle vorteilhaft aus dem gleichen Werkstoff gebildet werden.

Bevorzugt ist die Wandung über ein additives Fertigungsverfahren, insbesondere bevorzugt über ein binderbasiertes additives Fertigungsverfahren hergestellt. Damit lassen sich die in der Regel komplexen Formen des Gusseinsatzes besonders vorteilhaft abbilden. Es ist der Weg über ein additives Fertigungsverfahren also allein für die Darstellung der Wandung vorteilhaft.

Zusätzliche Vorteile bringt es, wenn neben der Wandung auch der wenigstens eine Kühlkanal und gegebenenfalls eine Stützstruktur über ein additives Fertigungsverfahren, insbesondere bevorzugt über ein binderbasiertes additives Fertigungsverfahren hergestellt sind. Dies erlaubt eine simultane Darstellung der Strukturen. Ferner sind auch für den wenigstens einen Kühlkanal komplexe Formen günstig zu realisieren.

Im besonders bevorzugten Fall sind also Wandung, Stützstruktur und Kühlkanäle einstückig über ein additives Fertigungsverfahren, insbesondere bevorzugt über ein binderbasiertes additives Fertigungsverfahren hergestellt.

Beim lagenweisen Aufbau einer generativen Fertigung können dann in einer Lage Bereiche von Wandung, Stützstruktur und Kühlkanälen simultan angelegt werden. In diesem besonders bevorzugten Fall gehen Wandung, Stützstruktur und Kühlkanäle frei von Fügezonen stofflich ineinander über.

Alternativ dazu könnten Kühlkanäle separat - etwa in Form vorgeformter Röhrchen - in die Kavität eingebracht werden.

Bevorzugt ist vorgesehen, dass die Kavität zwischen der Wandung und dem wenigstens einen Kühlkanal zumindest teilweise eine Füllung aus einem von dem Werkstoff der Wandung (dem Wandungsmaterial) verschiedenen Füllmaterial enthält.

Dies beschreibt den bevorzugten Fall, dass der Gusseinsatz zumindest teilweise mit einem vom Wandungsmaterial unterschiedlichen Füllmaterial gefüllt ist. Bevorzugt ist die Füllung hintergossen ausgebildet. Beispielsweise ist die Kavität mit Kupfer oder einer Kupferlegierung hintergossen.

Insbesondere weist das Füllmaterial eine höhere Wärmeleitfähigkeit als das Wandmaterials auf. Damit wird eine über den Gusseinsatz abführbare Wärmeleistung erhöht.

Vorteilhaft ist es, dass bei dem so geschaffenen Werkstoffverbund die jeweiligen Werkstoffe entsprechend ihren Stärken eingesetzt werden: so ist die einer Schmelze ausgesetzte Wandung aus einer gegenüber Schmelzen resistenten Refraktärmetall-Legierung gebildet, während die Füllung aus einem Werkstoff mit besonders hoher Wärmeleitfähigkeit beschaffen sein kann.

Günstig ist ferner die mechanische Stabilisierung des Gusseinsatzes durch die Füllung. Die Wandung kann relativ dünn ausgeführt werden, da sie innerlich von der Füllung abgestützt wird. Auch dies trägt zu einer vorteilhaften Materialausnutzung bei.

Bevorzugt weist das Füllmaterial eine Wärmeleitfähigkeit von wenigstens 200 W/mK, weiter bevorzugt von wenigstens 300 W/mK, besonders bevorzugt von wenigstens 350 W/mK auf.

Kupfer und Kupferlegierungen sind insbesondere als Füllmaterial geeignet, da Kupfer eine gute Kompatibilität mit flüssigphasen-gesinterten Refraktärmetall-Legierungen und eine hohe Wärmeleitfähigkeit aufweist.

Wegen der guten Kompatibilität mit Refraktärmetall-Legierungen entsteht eine innige Verbindung zwischen der Wandung und der Füllung und folglich ein guter Wärmeübergang.

Besonders günstig ist es, wenn eine Diffusionszone zwischen Füllmaterial und der Refraktärmetall-Legierung ausgebildet ist.

Die Erfindung ist insbesondere auf Gusseinsätze zur Verwendung mit Leichtmetallschmelzen, darunter besonders Aluminiumschmelzen gerichtet.

Besonders bevorzugt ist vorgesehen, dass wenigstens ein Abschnitt der Wandung über ein additives Fertigungsverfahren, insbesondere über ein binderbasiertes additives Fertigungsverfahren hergestellt ist. Dies beschreibt den besonders bevorzugten Fall, dass der Gusseinsatz zumindest abschnittsweise über ein additives Fertigungsverfahren, auch generatives Fertigungsverfahren oder *additive manufacturing* genannt, hergestellt ist, insbesondere bevorzugt über ein binderbasiertes additives Fertigungsverfahren. Binderbasiert bedeutet, dass ein für den generativen Aufbau verwendetes Metallpulver mit wenigstens einem organischen Binderbestandteil aufbereitet ist. Bekannte binderbasierte additive Fertigungsverfahren sind insbesondere: Filamentdruck mit Feedstockfilamenten, Selektives Lasersintern (SLS) mit Feedstockgranulat/-pulver, Lithographieverfahren mit Feedstock und Binderjetting mit gemischten oder vorlegierten oder granulierten Metallpulvern.

Über binderbasierte additive Fertigungsverfahren lassen sich die diskutierten Strukturmerkmale besonders vorteilhaft realisieren. Zu den Vorteilen, die aus der Herstellung über das additive Fertigungsverfahren resultieren, zählt etwa das Ausbleiben von Fügezonen. Bei binderbasierten additiven Fertigungsverfahren wird zunächst ein Grünkörper hergestellt, der seinen Zusammenhalt durch Binderbestandteile erhält. Die metallurgische Verbindung der metallischen Bestandteile erfolgt durch ein Sintern.

Für die Materialwahl des erfindungsgemäßen Gusseinsatzes, eine flüssigphasen-gesinterte Refraktärmetall-Legierung, ist die Herstellungsroute über ein binderbasiertes additives Fertigungsverfahren besonders vorteilhaft, wie weiter unten noch näher erläutert werden wird.

Besonders bevorzugt sind Wandung und Kühlkanäle sowie gegebenenfalls Stützstrukturen einstückig über das additive Fertigungsverfahren hergestellt. In anderen Worten ist der gesamte Gusseinsatz bevorzugt über das additive Fertigungsverfahren, insbesondere binderbasierte additive Fertigungsverfahren hergestellt. In vielen Fällen und wirtschaftlich vorteilhaft ist keine mechanische Nachbearbeitung von Oberflächen erforderlich.

Neben der vorteilhaften Darstellbarkeit komplexer Geometrien wie beispielsweise von Hinterschnitten bestehen auch strukturelle Vorteile der einstückigen Herstellung wie eine durchgängige stoffliche Verbindung zwischen den Elementen Wandung, Kühlkanälen und gegebenenfalls Stützstrukturen. Die Einstückigkeit trägt zur günstigen Wärmeabfuhr und mechanischen Stabilität bei.

Die Herstellung des Gusseinsatzes über ein additives Fertigungsverfahren ist für den Fachmann erkennbar. Insbesondere bestehen mikrostrukturelle und / oder makroskopische Unterschiede zwischen additiv aufgebauten und konventionell hergestellten Bauteilen. Beispielsweise erkennt der Fachmann die Herstellungsroute an unbearbeiteten Außenbereichen oder an Innenwandungen an sogenannten Layerlinien oder erhöhten Rauigkeiten. Diese Strukturen können auch gezielt verstärkt werden, beispielsweise um eine Innenwandung eines Kühlkanals strömungstechnisch zu modifizieren.

Neben mikrostrukturellen Unterschieden besteht freilich das Unterscheidungsmerkmal hinsichtlich der Komplexität und / oder Dünnwandigkeit der darstellbaren Strukturen.

Ferner sind bei dem Verfahren des Sinterfügens aus dem Stand der Technik in der Regel Defekte in der Fügezone vorhanden.

Schutz wird auch begehrt für ein Verfahren zur Herstellung eines Gusseinsatzes nach einem der vorangegangenen Ansprüche. Es handelt sich um ein binderbasiertes additives Herstellverfahren. Beispiele für binderbasierte additive Herstellverfahren sind insbesondere der Filamentdruck mit Feedstockfilamenten, Selektives Lasersintern (SLS) mit Feedstockgranulat oder -pulver, Lithographieverfahren mit Feedstock oder Binderjetting mit gemischten oder vorlegierten oder granulierten Metallpulvern.

Das erfindungsgemäße Verfahren umfasst die Schritte:
- Bereitstellen eines Pulvers einer flüssigphasen-sinterbaren Refraktärmetall-Legierung und von wenigstens einem organischen Binderbestandteil,
- Erzeugen eines Grünkörpers durch generatives Aufbauen einer Wandung aus dem mit wenigstens einem organischen Binderbestandteil aufbereiteten Pulver,
- Entbindern des derart hergestellten Grünkörpers, um einen Braunkörper zu erhalten,
- Sintern des Braunkörpers unter zumindest zeitweiser Anwesenheit flüssiger Phase zu einem metallischen Rohling eines Gusseinsatzes,
- optional Durchführen einer Endbearbeitung des Rohlings, um den Gusseinsatz zu erhalten.

Zunächst wird ein Pulver einer flüssigphasen-sinterbaren Refraktärmetall-Legierung und wenigstens ein organischer Binderbestandteil bereitgestellt. Das Bereitstellen kann bedeuten, dass das Metallpulver mit dem wenigstens einen organischen Binderbestandteil zu einer plastifizierten Masse verarbeitet wird. Diese Masse wird beispielsweise durch inniges mechanisches Vermischen und Kneten und / oder Extrudieren und / oder Granulieren und / oder Mahlen erhalten. Die plastifizierte Masse kann in unterschiedliche Darreichungsformen gebracht werden. Für den Filamentdruck werden Feedstockfilamente hergestellt, für Selektives Lasersintern (SLS) wird Feedstockgranulat oder Feedstockpulver bereitgestellt, für Lithographieverfahren wird üblicherweise ein Feedstockblock eingesetzt.

Alternativ wird - für den Fall des Binderjetting - der organische Binderbestandteil *in situ,* also während des schichtweisen Aufbaus auf das Metallpulver aufgebracht.

Die flüssigphasen-sinterbare Refraktärmetall-Legierung kann dabei als vorlegiertes Pulver oder als Mischung von elementaren Pulvern oder als Mischung von Vorlegierungen eingebracht werden.

Als Zusammensetzungen werden insbesondere vorgeschlagen: Wolfram-Schwermetall-Legierungen umfassend Wolfram mit einem oder mehreren Elementen aus der Gruppe Nickel, Eisen, Kupfer, Molybdän sowie flüssigphasen-sinterbare Molybdän-Basis-Legierung umfassend Molybdän mit einem oder mehreren Elementen aus der Gruppe Nickel, Eisen, Kupfer, Wolfram.

Durch das generative Fertigungsverfahren wird schichtweise ein die Wandung bildender Grünkörper erzeugt. Die so hergestellte Wandung bildet zumindest teilweise eine spätere Außenkontur des Grünkörpers.

Besonders vorteilhaft an der Darstellung über das generative Fertigungsverfahren ist es, dass komplexe Außen- und / oder Innengeometrien hergestellt werden können, die über konventionelle Fertigungsverfahren nicht oder nur sehr aufwändig realisiert werden können. Kühlkanäle können vorteilhaft etwa durch Aussparen von Material in der Wandung oder auch durch Bilden von geschlossenen Querschnitten innerhalb der Kavität erzeugt werden.

Der generative Aufbau erfolgt beispielsweise durch Filamentdruck mit Feedstockfilamenten, SLS mit Feedstockgranulat/-pulver, Lithographieverfahren mit Feedstock oder Binderjetting mit gemischten oder vorlegierten oder granulierten Metallpulvern.

Versuche der Anmelderin haben gezeigt, dass binderbasierte additive Herstellverfahren für die Anwendung von flüssigphasen-sinterbaren Refraktärmetall-Legierungen besonders geeignet sind.

Die für schweißbare Werkstoffe wie beispielsweise Stahl gängigen Laser- oder Elektronenstrahl-Schmelz-Verfahren sind für Verbundwerkstoffe wie flüssigphasen-sinterbare Refraktärmetall-Legierungen ungünstig. Durch den lokal hohen Wärmeeintrag eines energiereichen Strahls kann beispielsweise die niedrigschmelzende Phase bereits verdampfen, während der Schmelzpunkt der höherschmelzenden Phase noch lange nicht erreicht ist.

Das binderbasierte additive Herstellverfahren ist auch dadurch charakterisiert, dass nach dem schichtweisen Aufbau ein Grünkörper besteht. Der Grünkörper enthält das Metallpulver sowie den wenigstens einen organischen Binderbestandteil. In der Regel werden mehrere Binderbestandteile verwendet. Besonders vorteilhaft ist eine Zusammensetzung umfassend ein thermoplastisches Polymer und mindestens einen Weichmacher. In der Regel sind darüber hinaus Additive zugesetzt, beispielsweise als Schmiermittel oder um eine Viskosität einzustellen.

Das thermoplastische Polymer ist insbesondere ausgewählt aus der Gruppe von Polyurethan, Polyamid, Polyvinylpyrrolidon, Polyacrylat, Polyolefin oder einer Mischung daraus.

Der Weichmacher kann insbesondere ein Ester oder eine Mischung von Estern sein.

Geeignete, kommerziell verfügbare Binderzusammensetzungen sind etwa in der Europäischen Patentschrift EP 3 167 101 (B1) offenbart.

Der Grünkörper ist mechanisch robust und lässt sich beispielsweise einfach bearbeiten. Darin besteht ein weiterer Vorteil der binderbasierten Route.

Das Entbindern erfolgt chemisch, chemisch/thermisch oder nur thermisch. Beim Entbindern werden jene organischen Bestandteile entfernt, die vorwiegend zum Einstellen der Rheologie und Verarbeitbarkeit dienen.

Es verbleibt ein sogenanntes polymeres *backbone* (Rückgrat) zwischen Pulverkörnern, was dem durch das Entbindern erhaltenen Braunkörper ausreichend mechanische Stabilität für ein Handhaben verleiht. Vorteilhaft an dem Entbindern ist es ferner, dass mit reduzierter organischer Fracht in den Sinterschritt gegangen wird. Im Falle des oben genannten Beispiels von Polyamid erfolgt die Entbinderung vorzugsweise chemisch, etwa mit Aceton. Es verbleiben Brücken aus Polyamid zwischen Metallkörnern. Der nach dem Entbindern vorliegende Körper wird als Braunkörper bezeichnet.

Der Braunkörpers wird anschließend unter zumindest zeitweiser Anwesenheit flüssiger Phase zu einem metallischen Rohling eines Gusseinsatzes gesintert. Sintern unter zumindest zeitweiser Anwesenheit flüssiger Phase kann bedeuten, dass wie am Beispiel von MoCu oder WCu Legierungen das niedrigschmelzende Element (hier Cu) als Schmelze vorliegt und die höherschmelzenden Pulverpartikel (hier Mo bzw. W) benetzt und schließlich verbindet.

Es kann auch bedeuten, dass sich durch thermisch induzierte Vorgänge niedrigschmelzende Phasen unter teilweiser Anlösung der Mo bzw. W-Partikel bilden. Der letztere Vorgang wird in der Literatur als eigentliches Flüssigphasen-Sintern bezeichnet. Auf diesem Mechanismus funktionieren beispielsweise die bekannten Wolfram-Schwermetall-Legierungen.

Im Zusammenhang mit dieser Erfindung sollen beide Vorgänge als Sintern unter zumindest zeitweiser Anwesenheit flüssiger Phase verstanden werden.

Abhängig davon, ob nach dem Sintern bereits bezüglich der Endabmessungen ein fertiges Bauteil erhalten wird oder ob noch Maßänderungen erfolgen, wird von einer net-shape bzw. einer near-net-shape Fertigung gesprochen.

Die optionale Endbearbeitung des Rohlings umfasst etwa ein mechanisches Überarbeiten, oder eine Oberflächenbearbeitung, oder ein Strahlen, oder ein Besäumen.

Es kann aber die Notwendigkeit einer Endbearbeitung ganz entfallen. Dann ist der mit dem Schritt vor der optionalen Endbearbeitung erhaltene Rohling bereits der fertige Gusseinsatz.

Das Verfahren erlaubt die Herstellung eines Gusseinsatzes mit komplexen internen 3-dimensional verlaufenden Kühlkanälen, wobei Material nur in jenen Bereichen aufgewendet wird, wo später in der Anwendung Material benötigt wird.

Besonders bevorzugt wird die Wandung derart erzeugt, dass die Wandung eine Wandstärke aufweist, wobei die Wandstärke entlang wenigstens 50% einer Erstreckung der Wandung weniger als 25%, insbesondere weniger als 20% eines Durchmessers des Gusseinsatzes beträgt. Wie weiter oben erläutert, beschreibt dieses Merkmal eine Dünnwandigkeit des Gusseinsatzes. Die Ausführungen zur Dünnwandigkeit des Gusseinsatzes gelten auch für diesen, das Verfahren bestreffenden Abschnitt.

Die Ausbildung eines dünnwandigen Gusseinsatzes ist über das generative Fertigungsverfahren besonders vorteilhaft, da anders als bei einer zerspanenden Fertigung, nur der für die finale Gestalt tatsächlich benötigte Werkstoff eingesetzt werden muss.

Gemäß einer Variante wird ein separat bereitgestellter Kühlkanal mit dem derart erzeugten Gusseinsatz stoffschlüssig gefügt. Insbesondere kann etwa ein angepasst geformtes Stahlröhrchen in den gesinterten Gusseinsatz eingesetzt und beispielsweise über Hintergießen mit einem Füllmaterial mit der Wandung verbunden werden. Über diese Variante können Gusseinsätze mit einfachen Geometrien kostengünstig dargestellt werden.

Bevorzugt allerdings wird simultan zur Herstellung der Wandung auch wenigstens ein Kühlkanal über das generative Fertigungsverfahren hergestellt. Somit ist der wenigstens eine Kühlkanal integral mit der Wandung ausgebildet. Ferner kann gleichzeitig eine die Wandung und den wenigstens einen Kühlkanal verbindende Stützstruktur hergestellt werden. Dies ist besonders relevant für den Fall, dass der wenigstens eine Kühlkanal zumindest abschnittsweise von der Wandung beabstandet ausgebildet werden soll. Die Stützstruktur sorgt für eine Positionierung und mechanische Stabilisierung des derart verlaufenden Kühlkanals.

Insbesondere vorteilhaft ist es, die Wandung, Kühlkanäle und gegebenenfalls Stützstrukturen simultan zu erzeugen. Damit werden die Vorzüge des generativen Fertigungsverfahren besonders vorteilhaft ausgenutzt.

In einer Weiterbildung kann ein zumindest teilweises Füllen der Kavität mit einem vom Material der Wandung unterschiedlichen Füllmaterial erfolgen, wie bereits weiter oben näher diskutiert.

### Herstellungsbeispiel:

Als Metallpulver wurde DENSIMET^{®} D185 Pulver verwendet.

Das Metallpulver wies eine nominelle chemische Zusammensetzung von 97 wt. % Wolfram, 2 wt.% Nickel und 1 wt.% Eisen auf.

Die Korngröße d₅₀ lag zwischen 6-8 µm.

Das Pulver wurde mit einem thermoplastischen Binder auf Basis von Polyamid mit einem Weichmacher sowie Additiven zu einem Feedstockfilament verarbeitet. Der Füllgrad betrug rund 55 vol.%. Binder auf Basis von Polyamid haben sich als besonders vorteilhaft für die Anwendung mit Refrakträmetallen erwiesen.

Das Polyamid sorgt für die günstige thermoplastische Verarbeitbarkeit des Feedstocks, der Weichmacher moderiert die rheologischen Eigenschaften. Die Additive dienen zur Schmierung und Anpassung der Viskosität.

Mit dem Feedstockfilament wurde auf einem Filamentdrucker lagenweise ein Grünkörper aufgebaut.

Der so hergestellte Grünkörper wurde anschließend in Aceton chemisch entbindert.

Der so erhaltene Braunkörper wurde bei rund 1550 °C unter H2-Atmosphäre zum fertigen Gusseinsatz gesintert.

Schließlich wurde der Gusseinsatz mit Kupfer hintergossen.

Die Füllung des Gusseinsatzes mit einem Füllmaterial ist eine bevorzugte Ausführungsform.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: einen Gusseinsatz nach einem ersten Ausführungsbeispiel;
- Fig. 2:: einen Gusseinsatz nach einem weiteren Ausführungsbeispiel;
- Fig. 3:: einen Gusseinsatz nach einem weiteren Ausführungsbeispiel;
- Fig. 4:: einen Gusseinsatz nach einem weiteren Ausführungsbeispiel;
- Fig. 5a-5b:: Fotos eines Gusseinsatzes (Musterbauteil)
- Fig. 6a-6c: Schematische Darstellungen eines Gusseinsatzes
- Fig. 7a-7c: Schnittdarstellungen eines Gusseinsatzes
- Fig. 8a-8c: Rasterelektronenmikroskopische (REM) Aufnahmen von Oberflächen in 50-facher Vergrößerung
- Fig. 9a-9c: Rasterelektronenmikroskopische (REM) Aufnahmen von Oberflächen in 100-facher Vergrößerung
- Fig. 10a-10c: Rasterelektronenmikroskopische (REM) Aufnahmen von Oberflächen in 250-facher Vergrößerung

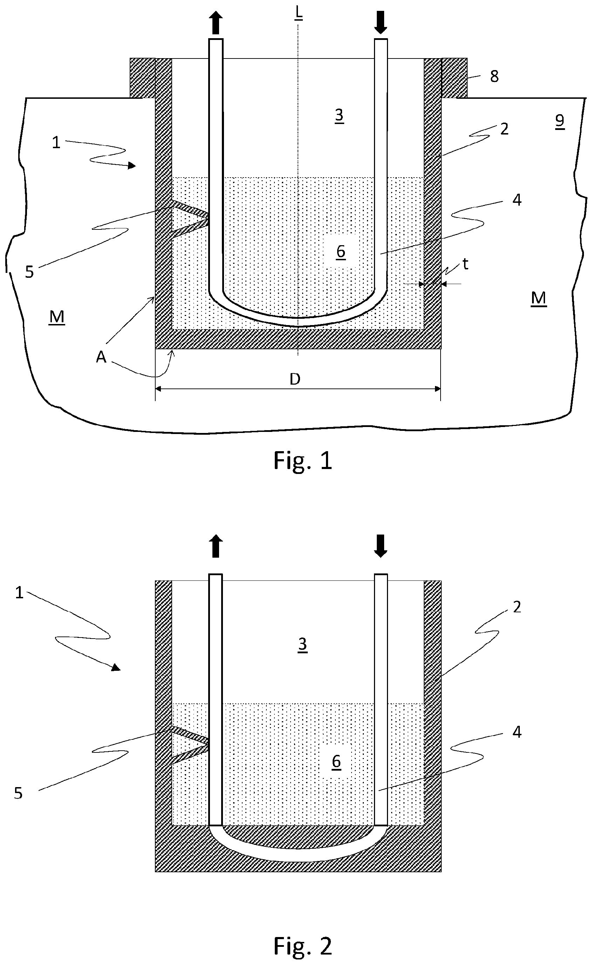

Figur 1 zeigt schematisch einen Gusseinsatz im Querschnitt nach einem ersten Ausführungsbeispiel.

Der Gusseinsatz 1 umfasst eine von einer flüssigphasen-gesinterten Refraktärmetall-Legierung gebildete Wandung 2, welche eine Art Schale bildet und eine Kavität 3 umschließt. Innerhalb dieses von der Wandung 2 umschriebenen Volumens, der Kavität 3, ist ein Kühlkanal 4 ausgebildet. Der Kühlkanal 4 ist also eine von der Kavität 3 verschiedene Einheit.

Der Kühlkanal 4 ist eine Leiteinrichtung für ein Kühlmedium. Der Begriff Kühlkanal bezeichnet im Zusammenhang dieser Anmeldung je nach Fall den freien Leitungsquerschnitt der Leiteinrichtung für das Kühlmedium (im Fall eines Verlaufes innerhalb der Wandung 2) oder die gesamte physische Leiteinrichtung, also deren Wand mit einer Wanddicke zusammen mit dem von der Wand begrenzten Leitungsquerschnitt.

Der Kühlkanal 4 ist in diesem Ausführungsbeispiel rohrförmige Leiteinrichtung ausgebildet. Blockpfeile deuten eine Einströmrichtung und eine Abströmrichtung eines Kühlmediums an. Es können natürlich auch mehrere Kühlkanäle 4 ausgebildet sein. Der wenigstens eine Kühlkanal 4 kann aus der Kavität 3 ragen, wie im vorliegenden Beispiel dargestellt, oder bündig mit einer offenen Seite des Gusseinsatzes 1 abschließen.

Der freie Leitungsquerschnitt des Kühlkanals 4 ist hier von einer Wand des Kühlkanals 4 gebildet, im Vergleich zu Ausführungsbeispielen, bei welchen der Kühlkanal 4 zumindest abschnittsweise in der Wandung 2 verläuft. Im letzteren Fall ist der freie Leitungsquerschnitt zumindest teilweise in der Wandung 2 ausgebildet.

Der Kühlkanal 4 ist in diesem Beispiel von einer Stützstruktur 5 gehalten und durch diese mit der Wandung 2 verbunden. Die Stützstruktur 5 ist bevorzugt in Form einer Gitterstruktur umfassend Stege und / oder Rippen ausgebildet.

Die Stützstruktur 5 hat die Aufgabe, den Kühlkanal 4 in der gewünschten Lage zu halten und zu stabilisieren. Vorteilhaft ist es, wenn die Stützstruktur 5 derart offen gestaltet ist, dass sich die Stützstruktur 5, genauer gesagt das von der Stützstruktur 5 gebildete Netzwerk von Hohlräumen, vollständig infiltrieren lässt.

In diesem Ausführungsbeispiel ist die optionale, bevorzugte Variante dargestellt, nach welcher der Gusseinsatz 1 zumindest teilweise von einer Füllung 6 aus einem Füllmaterial gefüllt ist, welches sich vom Wandungsmaterial unterscheidet. Die Füllung 6 besteht insbesondere aus einem Werkstoff mit einer höheren Wärmeleitfähigkeit als die des Wandungsmaterials. Besonders geeignet ist eine Füllung 6 aus Kupfer oder einer Kupferlegierung. Die Füllung 6 lässt sich in diesem Fall durch Hintergießen einfach darstellen.

Der Gusseinsatz 1 ist besonders bevorzugt monolithisch, das heißt einstückig. Das bedeutet, die Wandung 2, der Kühlkanal 4 und die Stützstruktur 5 gehen stofflich ineinander über. Wandung 2, Kühlkanal 4 und Stützstruktur 5 sind insbesondere aus demselben Material, dem Wandungsmaterial, gebildet und wurden zusammen in einem additiven Fertigungsverfahren hergestellt. Insbesondere ist der Gusseinsatz 1 über das Verfahren des Filamentdrucks (engl. *Fused Deposition Modeling* oder auch *Fused Filament Fabrication*) eines Feedstockfilaments hergestellt. Das Verfahren erlaubt die Darstellung komplexer Bauteilgeometrien mit Hohlräumen und Hinterschnitten. Binderbasierte additive Fertigungsverfahren sind für flüssigphasen-sinterbare Refraktärmetall-Legierungen besonders vorteilhaft.

Bei einer Verwendung des Gusseinsatzes 1 ragt der Gusseinsatz in eine (hier nicht näher dargestellte) Gussform 9. Optional kann an den Gusseinsatz 1 eine Schulter oder ein Flansch 8 angeformt sein, um eine Anlagefläche, Dichtfläche und / oder Montagemöglichkeit zur Gussform 9 zu schaffen. Bevorzugt ist die Schulter oder Flansch 8 monolithisch mit dem Gusseinsatz 1 aus dem Wandungsmaterial ausgebildet.

In einem Einsatz ist der Gusseinsatz 1 an einer äußeren Oberfläche A einer Schmelze M ausgesetzt. Eine Oberfläche des Gusseinsatzes 1 bildet daher in der Regel eine Außenkontur eines Werkstücks ab. Durch den Gusseinsatz 1 kann einer in der Gussform 9 befindlichen Schmelze M verstärkt Wärme entzogen werden. Damit können Eigenschaften eines in der Gussform 9 hergestellten Bauteiles günstig beeinflusst werden. Insbesondere günstig ist ein oberflächenkonturnaher Verlauf der Kühlkanäle 4. Durch eine variable Beabstandung des Kühlkanals 4 von der äußeren Oberfläche A des Gusseinsatzes 1 kann eine lokale Kühlwirkung beeinflusst werden.

Es kann vorgesehen sein, dass in einem Bereich des Gusseinsatzes 1, der in bei einer Verwendung weit in die Gussform 9 ragt, in anderen Worten in einem vom Zulauf des Kühlmediums abgewandten Bereich, ein Abstand des Kühlkanals 4 von der äußeren Oberfläche A geringer ist als in einem dem Zulauf des Kühlmediums nahen Bereich.

Auch ist es über das diskutierte additive Herstellungsverfahren besonders elegant möglich, Querschnittsänderungen in Kühlkanälen 4 auszubilden, um so auf den Wärmeübergang Einfluss zu nehmen.

Der hier gezeigte Gusseinsatz 1 ist zylindrisch. Es sind auch beliebig andere Formen darstellbar. Der Gusseinsatz 1 weist einen Durchmesser D und eine Wandstärke t der Wandung 2 auf. Der Gusseinsatz 1 ist dünnwandig ausgeführt. Im vorliegenden Beispiel beträgt die Wandstärke t etwa 1/12 des Durchmessers D, also rund 8%.

Die Wandstärke t ist als Normalabstand zwischen einem der Kavität 3 zugewandten Punkt der Wandung 2 und einem Punkt an einer äußeren Oberfläche A der Wandung 2 festlegbar.

Erfindungsgemäß ist vorgesehen, dass die Wandstärke t zumindest abschnittsweise weniger als 25% eines Durchmessers D des Gusseinsatzes 1 beträgt.

Für den Gusseinsatz 1 der Erfindung ist es bevorzugt, dass die Wandstärke t durchschnittlich weniger als 25% des Durchmessers D beträgt. Weiter bevorzugt beträgt die Wandstärke t durchschnittlich weniger als 20%, weiter bevorzugt weniger als 10% des Durchmessers D. Zur Bewertung der Wandstärke t werden jene Abschnitte der Wandung 2 betrachtet, die in einem Einsatz in eine Gussform ragen. Abschnitte, die vorwiegend einem Befestigungszweck dienen wie eine Schulter 8, sollen nicht gezählt werden. Durch die Dünnwandigkeit kann an Wandungsmaterial, der Refraktärmetall-Legierung, gespart werden. Neben wirtschaftlichen Überlegungen kann dies auch vorteilhaft sein, um bei der Variante einer Füllung 6 mehr von dem Füllmaterial unterzubringen und dieses besonders nahe an die einer Schmelze ausgesetzten äußeren Oberfläche A des Gusseinsatzes 1 anzuordnen. Eine Dünnwandigkeit kann auch vorteilhaft sein für den Fall, dass der Gusseinsatz 1 ganz oder abschnittsweise eine geringe thermische Masse aufweisen soll. Es kann beispielsweise erwünscht sein, dass der Gusseinsatz 1 eine möglichst geringe thermische Trägheit aufweist, beispielsweise bei kurzen Zykluszeiten. Dies kann vorteilhaft erreicht werden, indem der Gusseinsatz 1 dünnwandig und / oder zumindest teilweise hohl ausgeführt ist. Zumindest teilweise hohl bedeutet, dass der Gusseinsatz 1 zumindest teilweise keine Materialfüllung enthält. Dies kann über das additive Fertigungsverfahren vorteilhaft und definiert erreicht werden.

Bei Abweichen von einer zylindrischen Grundform lassen sich zur Einordnung der Dünnwandigkeit äquivalente charakteristische Größen zur Wandstärke t und Durchmessers D definieren.

Zur Festlegung einer charakteristischen Wandstärke t wird ein Mittelwert von Wandstärken der Wandung 2 jener Bereiche herangezogen, die bei einem Einsatz des Gusseinsatzes 1 tatsächlich einer Schmelze ausgesetzt sind.

Ein charakteristischer Durchmesser D lässt sich durch einen Durchmesser eines kleinsten umhüllenden Zylinders festlegen, der jenen Abschnitt des Gusseinsatzes 1 umfängt, der bei einem Einsatz des Gusseinsatzes 1 tatsächlich einer Schmelze ausgesetzt sind. Somit kann das Verhältnis von Wandstärke t zu Durchmesser D auch für von einem Zylinder abweichende Formen des Gusseinsatzes 1 angegeben werden.

Es sei wiederholt, dass Dünnwandigkeit nicht bedeutet, dass der Gusseinsatz 1 hohl sein muss. Er kann durchaus eine Füllung 6 enthalten. Dünnwandigkeit bedeutet vielmehr, dass die aus Refraktärmetall-Legierung gebildete Wandung 2 nur so stark ist, wie für Dichtigkeit und Beständigkeit gegen die betreffende Schmelze erforderlich ist.

Figur 2 zeigt ein weiteres Ausführungsbeispiel eines Gusseinsatzes 1 im Querschnitt. Die Bezugszeichen sind wie für Figur 1 vergeben und werden daher nicht erneut erläutert.

Das hier gezeigte Ausführungsbeispiel unterscheidet sich unter anderem dadurch, dass der Kühlkanal 4 abschnittsweise in der Wandung 2 verläuft. Der Kühlkanal 4 kann dadurch besonders oberflächenkonturnahe geführt werden. Diese auch als "*Conformal Cooling*" bezeichnete Maßnahme unterstützt eine homogene Wärmeabfuhr durch den Gusseinsatz 1.

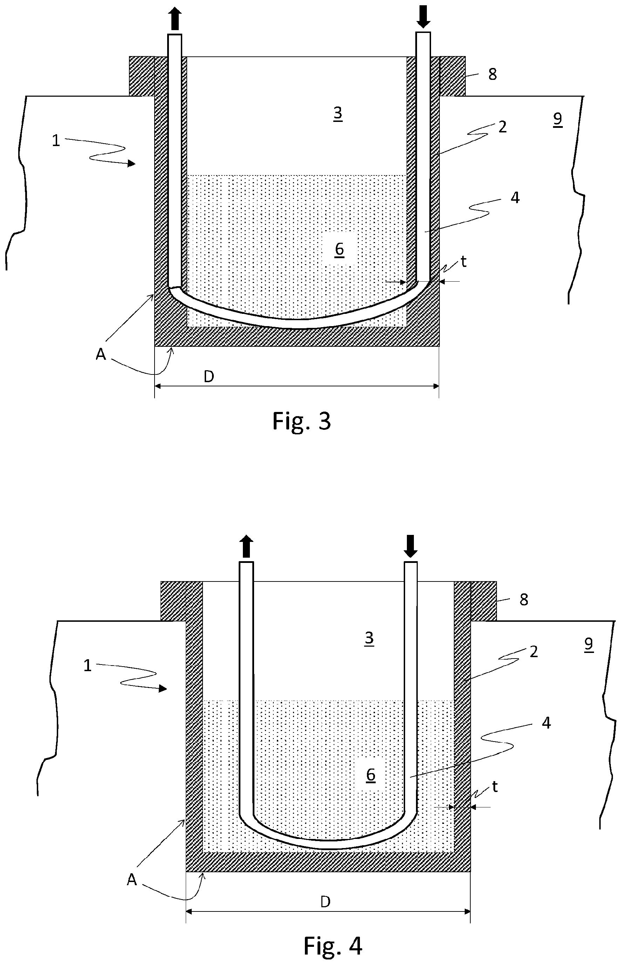

Figur 3 zeigt ein weiteres Ausführungsbeispiel eines Gusseinsatzes 1 im Querschnitt. Hier ist im Gegensatz zu dem Beispiel von Figur 2 keine Stützstruktur 5 ausgebildet, sondern der Kühlkanal 4 ist teilweise innerhalb der Wandung 2 ausgebildet und verläuft abschnittsweise innerhalb der Kavität 3. Der Kühlkanal 4 ist hier einstückig mit der Wandung 2 ausgebildet. Die optionale Füllung 6 ist auch in diesem Beispiel gezeigt.

Figur 4 zeigt ein weiteres Ausführungsbeispiel eines Gusseinsatzes 1 im Querschnitt. Hier verläuft der Kühlkanal 4 ohne Stützstruktur 5 innerhalb der Kavität 3. Der Kühlkanal 4 kann auch separat von der Wandung 2 erzeugt sein. Es ist vorstellbar, den Kühlkanal 4 beispielsweise als Röhrchen bereitzustellen und mit der Wandung 2 über geeignete Mittel und / oder eine Füllung 6 zu verbinden. Der Kühlkanal 4 ist hier also nicht einstückig mit der Wandung 2 ausgebildet.

Wie weiter oben ausgeführt, ist allerdings eine einstückige Darstellung der Wandung 2 mit dem wenigstens einem Kühlkanal 4 über ein additives Fertigungsverfahren bevorzugt.

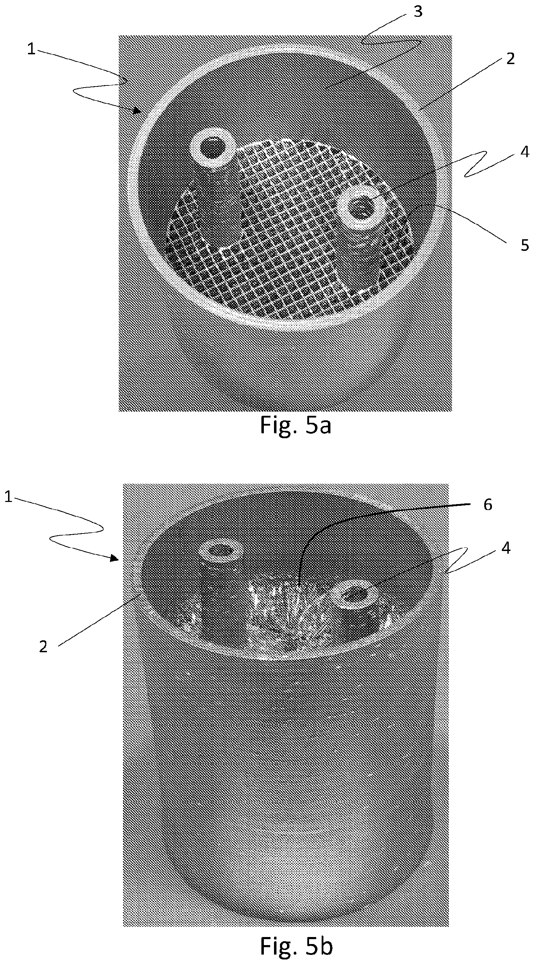

Figur 5a zeigt eine fotografische Aufnahme eines Gusseinsatzes 1 in Form eines Musterbauteils. Die Blickrichtung weist auf Zu- und Ablauföffnungen des Kühlkanals 4. Im Inneren des Gusseinsatzes 1 sind in der Kavität 3 ausgebildete gitterartige Stützstrukturen 5 zu erkennen, welche den Kühlkanal 4 positionieren. Der Gusseinsatz 1 wurde über Filamentdruck mit Feedstockfilamenten aus einer Wolfram-Schwermetall-Legierung erzeugt. Die Wandung 2, die Stützstrukturen 5 und der Kühlkanal 4 sind demnach einstückig ausgebildet.

Figur 5b zeigt in einer fotografischen Aufnahme den Gusseinsatz 1 von Figur 5a, wobei hier ein Großteil der Kavität 3 eine Füllung 6 aus einem von dem Werkstoff der Wandung 2 verschiedenen Füllmaterial enthält. Die Füllung 6 besteht hier aus Kupfer, welches über Hintergießen in den Gusseinsatz 1 eingebracht wurde. Diese Variante weist besonders günstige Eigenschaften hinsichtlich der erreichbaren Wärmeabfuhr auf. Zudem bildet die Füllung 6 auch eine mechanische Stützung der Kühlkanäle 4 und der dünnwandigen Wandung 2.

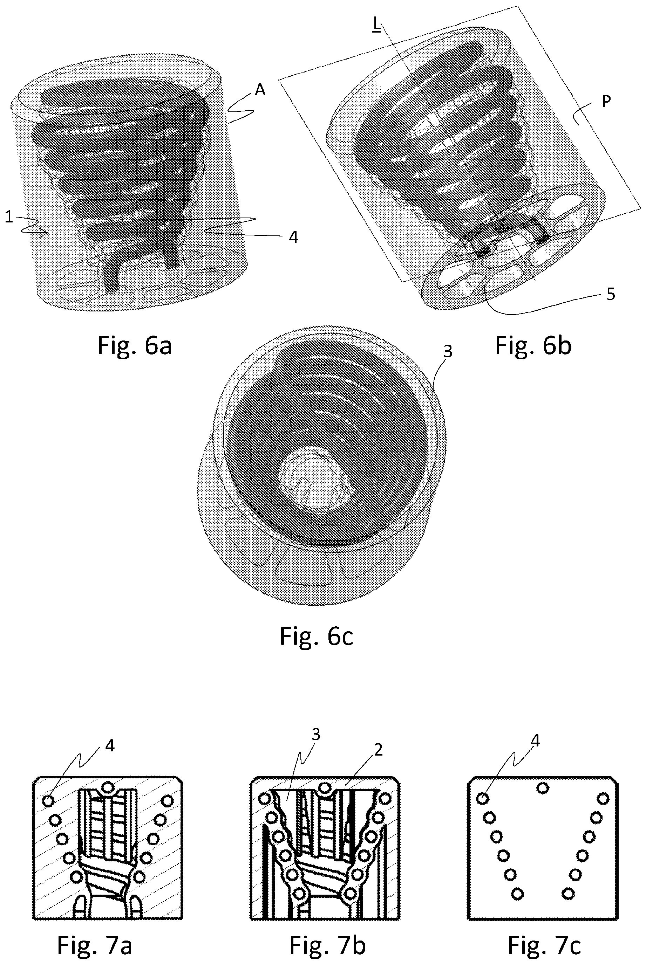

Figuren 6a bis 6c zeigen perspektivische Darstellungen eines Gusseinsatzes 1 in verschiedenen Ansichten mit jeweils halb-transparenter Visualisierung. Der Kühlkanal 4 verläuft spiralförmig, wobei ein Abstand des Kühlkanals 4 von einer äußeren Oberfläche A des Gusseinsatzes 1 von einem Bereich eines Zulaufs eines Kühlmediums (in Figur 6a entspricht dieser Bereich dem unteren Bildrand) mit zunehmender Entfernung davon abnimmt. In anderen Worten verläuft der Kühlkanal 4 in einem Abschnitt des Gusseinsatzes 1, der bei einer Verwendung des Gusseinsatzes 1 weiter in eine Gussform 9 (hier nicht dargestellt) ragt, näher an der äußeren Oberfläche A als in dem Bereich des Zulaufs des Kühlmediums.

Figur 6b zeigt den Gusseinsatz 1 in einer anderen Blickrichtung. Zu erkennen ist die in Form von Rippen ausgebildete Stützstruktur 5. Weiters eingezeichnet ist eine Schnittebene P, deren Ebenennormale senkrecht zu einer Längsachse L des Gusseinsatzes 1 verläuft und welche die Längsachse L enthält.

Figur 6c zeigt den Gusseinsatz 1 mit Blickrichtung auf jene Stirnseite des Gusseinsatzes 1, welche bei einer Verwendung in eine hier nicht dargestellte Gussform ragt. Man erkennt in der Darstellung die dünnwandige Ausbildung der Wandung 3.

Die Figuren 7a bis 7c zeigen schematische Längsschnitte des in Figuren 6a bis 6c dargestellten Gusseinsatzes 1, welche Längsschnitte durch Rotieren der Schnittebene P um die Längsachse L erzeugt werden.

In Figur 7a ist die Schnittebene P so gelegt, dass sie durch die Stützstruktur 5 verläuft.

In Figur 7b ist die Schnittebene P so gelegt, dass sie zwischen Stützstrukturen 5 verläuft, wodurch die von der Wandung 2 gebildete Kavität 3 erkennbar ist. Figur 7c zeigt schematisch den Verlauf des Kühlkanals 4 (keine Schnittdarstellung).

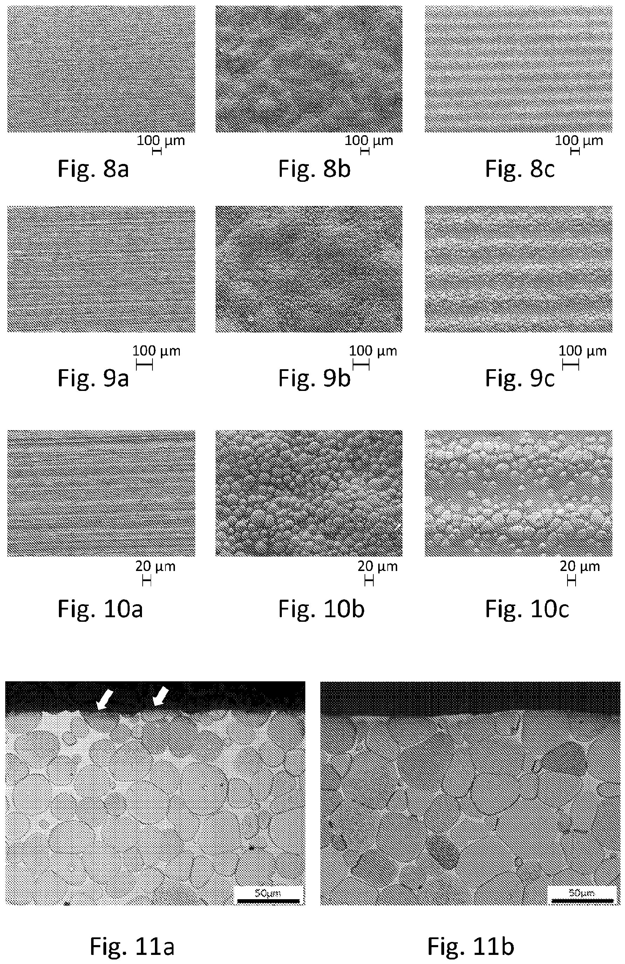

Figuren 8a-8c, 9a-9c, 10a-10c zeigen rasterelektronenmikroskopische Aufnahmen verschiedener Oberflächen von Wolfram-Schwermetall Proben. Jede Serie ist mit gleicher Vergrößerung aufgenommen.

In der ersten Spalte (Figuren 8a, 9a, 10a) sind jeweils geschliffene Oberflächen von Wolfram-Schwermetall in zunehmender Vergrößerung gezeigt. Diese Oberflächen sind beispielsweise bei konventionell hergestellten Gusseinsätzen zu beobachten.

In der zweiten Spalte (Figuren 8b, 9b, 10b) sind Oberflächen von Wolfram-Schwermetall in zunehmender Vergrößerung dargestellt, das über Selektives Lasersintern (SLS) von Feedstockgranulat hergestellt wurde. Die Oberflächen sind wie gesintert belassen (as sintered). Man erkennt eine leicht hügelige Ausprägung der Oberfläche, welche von den Körnern des Feedstockgranulats stammt.

In der dritten Spalte (Figuren 8c, 9c, 10c) sind Oberflächen von Wolfram-Schwermetall in zunehmender Vergrößerung dargestellt, das über Filamentdruck mit Feedstockfilamenten hergestellt wurde.

Die Oberflächen sind wie gesintert belassen (*as sintered*). Man erkennt eine leicht wellige Ausprägung der Oberfläche, welche von den abgelegten Feedstockfilamenten stammt.

Figuren 8b, 9b, 10b sowie 8c, 9c, 10c zeigen also Oberflächen, wie sie an einem erfindungsgemäß hergestellten, unbearbeiteten Gusseinsatz 1 zu beobachten sind.

Der Fachmann erhält anhand der Oberflächenausprägung von wie gesintert belassenen Oberflächen Hinweise auf das Herstellungsverfahren.

Insbesondere an jenen Abschnitten des erfindungsgemäßen Gusseinsatzes 1, welche keine nachträgliche Oberflächenbearbeitung erfahren, ist so ein Rückschluss auf den Herstellungsweg möglich.

Figur 11a zeigt einen Querschliff einer geschliffenen Oberfläche eines Körpers aus Wolfram-Schwermetall. Man erkennt die angeschnittenen Wolfram-Körner in einer Matrix aus metallischer Binderphase. Beispielhaft sind angeschnittene Körner durch Blockpfeile gekennzeichnet.

Figur 11b zeigt einen Querschliff einer unbearbeiteten Sinteroberfläche eines Körpers aus Wolfram-Schwermetall. Man erkennt eingeformte, abgeflachte Wolfram-Körner in der Matrix aus metallischer Binderphase.

An einem erfindungsgemäß hergestellten Gusseinsatz 1 sind - sofern keine nachträgliche Bearbeitung erfolgt - Oberflächen ohne angeschnittene Körner wie in Figur 11b dargestellt zu beobachten.

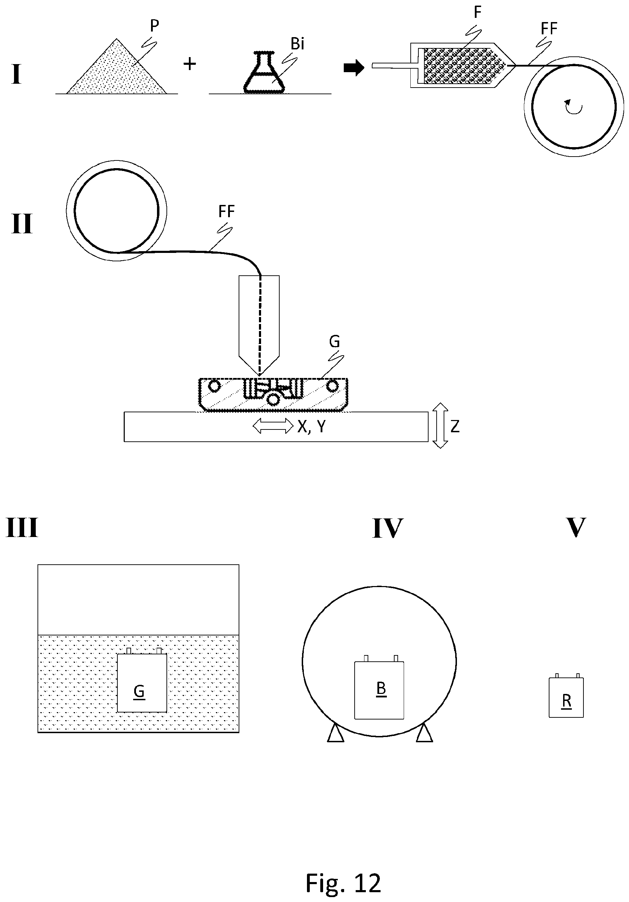

Figur 12 zeigt schematisch den Verfahrensablauf zur Herstellung eines Gusseinsatzes 1 nach der Variante des Filamentdrucks mit Feedstockfilamenten.

Dabei wird in einem ersten Schritt (I) Metallpulver - P - einer flüssigphasen-sinterbaren Refraktärmetall-Legierung mit einem Binder - Bi - sowie weiteren organischen Bestandteilen zu einem plastisch verarbeitbaren Feedstock F und weiter zu einem Feedstockfilament - FF - verarbeitet.

Ein Feedstockfilament ist ein dünner, meist über Extrusion hergestellter Faden aus der Feedstockmasse, welche meist biegsam ist und sich beispielsweise auf eine Spule aufwickeln lässt.

In einem nächsten Schritt (II) wird das Feedstockfilament durch eine beheizbare Düse auf einen beweglichen Tisch extrudiert. Der sogenannte (Filament-) Druckprozess findet lagenweise nach einem zuvor generierten Schichtmodell zu dem herzustellenden Grünkörper - G - statt und wird derart geführt, dass die aufgebrachten Feedstockspuren miteinander verschmelzen.

Der erzeugte Grünkörper des späteren Gusseinsatzes 1 ist um die beim Sintern zu erwartenden Schwindungsfaktoren und etwaige notwendige Endbearbeitungsaufmaße in X-, Y- und Z-Richtung aufskaliert.

Man erhält einen Grünkörper - G - des späteren Gusseinsatzes 1.

In einem Entbinderungsschritt (III) wird der Großteil des organischen Binders entfernt. Hier ist ein chemisches Entbindern gezeigt. Alternativ kann auch thermisch oder katalytisch entbindert werden.

Der so erhaltene Braunkörper - B - wird anschließend unter zumindest zeitweiser Anwesenheit flüssiger Phase gesintert, Schritt IV.

Man erhält einen metallischen Rohling - R - des Gusseinsatzes 1, Schritt V. Optional kann eine Endbearbeitung erfolgen.

## Patentansprüche

1. Gusseinsatz (1) umfassend
- eine Wandung (2), die zu wenigstens 80. vol.% aus einer flüssigphasen-gesinterten Refraktärmetall-Legierung besteht,
- eine von der Wandung (2) gebildete Kavität (3),
- wenigstens einen, von der Kavität (3) verschiedenen Kühlkanal (4), der zumindest abschnittsweise innerhalb der Kavität (3) und / oder der zumindest abschnittsweise innerhalb der Wandung (2) ausgebildet ist, wobei die Wandung (2) eine Wandstärke (t) aufweist, welche Wandstärke (t) als Normalabstand zwischen einem der Kavität (3) zugewandten Punkt der Wandung (2) und einem Punkt an einer äußeren Oberfläche (A) der Wandung (2) festlegbar ist, und die Wandstärke (t) entlang wenigstens 50% einer Erstreckung der Wandung (2) weniger als 25% eines Durchmessers (D) des Gusseinsatzes (1) beträgt.

2. Gusseinsatz (1) nach Anspruch 1, wobei eine die Wandung (2) und den wenigstens einen Kühlkanal (4) verbindende Stützstruktur (5) ausgebildet ist.

3. Gusseinsatz (1) nach Anspruch 2, wobei die Stützstruktur (5) in Form diskreter Stege und / oder Rippen ausgebildet ist.

4. Gusseinsatz (1) nach Anspruch 2 oder 3, wobei die Stützstruktur (5) aus dem gleichen Werkstoff wie die Wandung (2) ausgebildet ist.

5. Gusseinsatz (1) nach wenigstens einem der vorangegangenen Ansprüche, wobei der wenigstens eine Kühlkanal (4) aus dem gleichen Werkstoff wie die Wandung (2) ausgebildet ist.

6. Gusseinsatz (1) nach wenigstens einem der vorangegangenen Ansprüche, wobei der wenigstens eine Kühlkanal (4) zumindest abschnittsweise einen spiralförmigen Verlauf aufweist.

7. Gusseinsatz (1) nach wenigstens einem der vorangegangenen Ansprüche, wobei der wenigstens eine Kühlkanal (4) zumindest abschnittsweise Querschnittsänderungen aufweist.

8. Gusseinsatz (1) nach wenigstens einem der vorangegangenen Ansprüche, wobei die Kavität (3) zwischen der Wandung (2) und dem wenigstens einen Kühlkanal (4) zumindest teilweise eine Füllung (6) aus einem von dem Werkstoff der Wandung (2) verschiedenen Füllmaterial enthält.

9. Gusseinsatz (1) nach Anspruch 8, wobei das Füllmaterial ausgewählt ist aus der Gruppe von Kupfer und Kupferlegierungen.

10. Verfahren zur Herstellung eines Gusseinsatzes (1) nach einem der vorangegangenen Ansprüche, das Verfahren umfassend die Schritte:
- Bereitstellen eines Pulvers (P) einer flüssigphasen-sinterbaren Refraktärmetall-Legierung und von wenigstens einem organischen Binderbestandteil,
- Erzeugen eines Grünkörpers (G) durch generatives Aufbauen einer Wandung (2) aus dem mit wenigstens einem organischen Binderbestandteil aufbereiteten Pulver (P),
- Entbindern des derart hergestellten Grünkörpers (G), um einen Braunkörper (B) zu erhalten,
- Sintern des Braunkörpers (B) unter zumindest zeitweiser Anwesenheit flüssiger Phase zu einem metallischen Rohling (R) eines Gusseinsatzes (1),
- optional Durchführen einer Endbearbeitung des Rohlings (R), um den Gusseinsatz (1) zu erhalten.

11. Verfahren nach Anspruch 10, wobei simultan eine die Wandung (2) und den Kühlkanal (4) verbindende Stützstruktur (5) durch generatives Aufbauen hergestellt wird.

## Claims

1. A casting insert (1), comprising
- a casting insert wall (2) formed essentially from a liquid-phase-sintered refractory metal alloy,
- a cavity (3) formed by the casting insert wall (2),
- at least one cooling duct (4) that is different from the cavity (3) and which at least in sections is configured within the cavity (3) and/or which at least in sections is configured within the casting insert wall (2),
wherein the casting insert wall (2) has a wall thickness (t), which wall thickness (t) is definable as a normal distance between a point of the casting insert wall (2) facing the cavity (3) and a point on an outer surface (A) of the casting insert wall (2), and the wall thickness (t) along at least 50% of an extent of the casting insert wall (2) is less than 25% of a diameter (D) of the casting insert (1).

2. The casting insert (1) as claimed in claim 1, wherein there is configured a support structure (5) connecting the casting insert wall (2) and the at least one cooling duct (4).

3. The casting insert (1) as claimed in claim 2, wherein the support structure (5) is configured in the form of discrete crosspieces and/or ribs.

4. The casting insert (1) as claimed in claim 2 or 3, wherein the support structure (5) is formed from the same material as the casting insert wall (2).

5. The casting insert (1) as claimed in at least one of the preceding claims, wherein the at least one cooling duct (4) is formed from the same material as the casting insert wall (2).

6. The casting insert (1) as claimed in at least one of the preceding claims, wherein the at least one cooling duct (4) at least in sections has a spiral-shaped profile.

7. The casting insert (1) as claimed in at least one of the preceding claims, wherein the at least one cooling duct (4) at least in sections exhibits cross-sectional variations.

8. The casting insert (1) as claimed in at least one of the preceding claims, wherein the cavity (3) between the casting insert wall (2) and the at least one cooling duct (4) at least partially contains a filling (6) formed of a fill material that differs from the material of the casting insert wall (2).

9. The casting insert (1) as claimed in claim 8, wherein the fill material is selected from the group of copper and copper alloys.

10. A method for producing a casting insert (1) as claimed in any of the preceding claims, the method comprising the steps of:
- providing a powder (P) of a liquid-phase-sinterable refractory metal alloy and at least one organic binder constituent,
- producing a green body (G) by additively constructing at least one section of a casting insert wall (2) from the powder (P) treated with at least one organic binder constituent,
- debindering the green body (G) produced in this way to obtain a brown body (B),
- sintering the brown body (B) in the at least temporary presence of liquid phase to give a metallic blank (R) of a casting insert (1),
- optionally performing finishing of the blank (R) to obtain the casting insert (1).

11. The method as claimed in claim 10, wherein a support structure (5) connecting the casting insert wall (2) and the cooling duct (4) at least in sections is simultaneously produced by additive construction.

## Revendications

1. Insert de coulage (1) comprenant
- une paroi (2) qui comprend au moins 80 % en volume d'un alliage métallique réfractaire fritté en phase liquide,
- une cavité (3) formée par la paroi (2),
- au moins un conduit de refroidissement (4) qui est différent de la cavité (3) et qui est formé au moins par portions à l'intérieur de la cavité (3) et/ou qui est formé au moins par portions à l'intérieur de la paroi (2), la paroi (2) ayant une épaisseur de paroi (t), laquelle épaisseur de paroi (t) peut être définie comme la distance normale entre un point de la paroi (2) dirigé vers la cavité (3) et un point sur une surface extérieure (A) de la paroi (2), et l'épaisseur de paroi (t) le long d'au moins 50 % d'une extension de la paroi (2) étant inférieure à 25 % d'un diamètre (D) de l'insert de coulage (1).

2. Insert de coulage (1) selon la revendication 1, une structure de support (5) étant prévue qui relie la paroi (2) et l'au moins un conduit de refroidissement (4).

3. Insert de coulage (1) selon la revendication 2, la structure de support (5) étant conçue sous la forme de nervures et/ou d'ailettes discrètes.

4. Insert de coulage (1) selon la revendication 2 ou 3, la structure support (5) étant réalisée à partir de la même matière que la paroi (2).

5. Insert de coulage (1) selon l'une au moins des revendications précédentes, l'au moins un conduit de refroidissement (4) étant réalisé à partir de la même matière que la paroi (2).

6. Insert de coulage (1) selon l'une au moins des revendications précédentes, l'au moins un conduit de refroidissement (4) présentant un tracé en spirale au moins par portions.

7. Insert de coulage (1) selon l'une au moins des revendications précédentes, l'au moins un conduit de refroidissement (4) présentant des variations de section transversale au moins par portions.

8. Insert de coulage (1) selon l'une au moins des revendications précédentes, la cavité (3) entre la paroi (2) et l'au moins un conduit de refroidissement (4) contenant au moins partiellement un remplissage (6) en une matière de remplissage différente de la matière de la paroi (2).

9. Insert de coulage (1) selon la revendication 8, la matière de remplissage étant choisie dans le groupe comprenant le cuivre et des alliages de cuivre.

10. Procédé de fabrication d'un insert de de coulage (1) selon l'une des revendications précédentes, le procédé comprenant les étapes suivantes :
- fournir une poudre (P) d'un alliage métallique réfractaire pouvant être fritté en phase liquide et au moins un composant liant organique,
- générer un corps vert (G) par construction générative d'une paroi (2) à partir de la poudre (P) préparée avec au moins un composant liant organique,
- éliminer le liant du corps vert (G) ainsi produit pour obtenir un corps brun (B),
- fritter le corps brun (B) en présence au moins temporaire d'une phase liquide pour former une ébauche métallique (R) d'un insert de coulage (1),
- éventuellement effectuer un traitement final de l'ébauche (R) pour obtenir l'insert de coulage (1).

11. Procédé selon la revendication 10, une structure de support (5) qui relie la paroi (2) et le conduit de refroidissement (4) étant réalisée simultanément par construction générative.
